# EUROPÄISCHE PATENTANMELDUNG

(11) **EP 4 443 258 A1**
(43) Veröffentlichungstag der Anmeldung: **09.10.2024**
(21) Anmeldenummer: 23167183.5
(22) Anmeldetag: 07.04.2023
(51) Int. Cl.: G05B 23/02

(54) **VERFAHREN ZUR FEHLERERKENNUNG IN TECHNISCHEN SYSTEMEN**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Die Erfindung betrifft ein computerimplementiertes Verfahren zur Fehlererkennung in technischen Systemen, bei dem mit Methoden der künstlichen Intelligenz auf Basis von Betriebsdaten des technischen Systems Fehler erkannt und klassifiziert werden, dadurch gekennzeichnet, dass zur Erkennung und Klassifikation der Fehler ein künstliches neuronales Netzwerk (4) vorgesehen wird, welches mit erkannten Fehlerdaten trainiert wird, dass die Ausgabeschicht des neuronalen Netzwerks als Softmax-Schicht (5) ausgebildet ist, sodass zu jedem Ergebnis eine Aussage über die Wahrscheinlichkeitsverteilung der Klassen des Fehlers (6) erhalten wird, dass die Aussagen geclustert (7,8) werden und Distanzmaße als Qualitätsindikatoren zur Bewertung der Zuverlässigkeit des Klassifikationsvorganges herangezogen werden und dass der Trainingsvorgang solange wiederholt wird, bis dass die Zuverlässigkeit der Klassifikationsvorgänge den vorgegebenen Qualitätsindikatoren entspricht.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein Verfahren zur Erkennung von Fehlern in technischen Systemen.

Durch die rechtzeitige Erkennung eines abweichenden Verhaltens von technischen Systemen, einer sogenannten Anomalie können Ausfälle vermieden, Wartungen zielgerichtet durchgeführt, oder Leistungsparameter gesteigert werden.

Hierzu werden mit Methoden der künstlichen Intelligenz kontinuierlich erfasste Betriebsparameter des überwachten Systems mit Daten verglichen, welche das Normverhalten widerspiegeln, aus Abweichungen auf mögliche Fehler geschlossen und ggf. Gegenmaßnahmen ergriffen.

Ein beliebter Algorithmus in diesem Bereich ist beispielsweise der Isolation Forest Algorithmus mit dem Daten identifiziert werden, die sich von vorher gelerntem normalem Verhalten unterscheiden.

Aus der US 6,889,218 B1 ist eine Erkennung von Anomalien in einem Datenstrom bekannt, wobei in einem Offline-Prozess eine Baumstruktur mit einem Endungsbaum (suffix tree) erzeugt wird, in dem Endungen abgespeichert sind, die bestimmte interessierende Grammatikmuster aufweisen, und wobei in einem nachfolgenden Online-Prozess der Datenstrom mit den Grammatikregeln verglichen wird, um Abweichungen festzustellen.

Aus der DE 10 2008 002 964 A1 ist ein Verfahren zur Identifikation eines anomalen Wertes bekannt, bei dem Sensor-Betriebsdaten von einer Maschine gewonnen und wenigstens ein Ausnahmeanomaliewert aus den Sensormesswerten berechnet wird. Hierbei stützt sich die Anomalieerkennung auf eine Normalverteilung der Betriebsdaten.

Für Predictive Maintenance, d.h. prädiktive Instandhaltungstechniken, mittels denen beispielsweise automatisch Wartungsaufträge ausgelöst und einem Techniker zugeordnet, oder die Verfügbarkeit von Ersatzteilen geprüft und eventuell benötigte Teile selbstständig bestellt werden können, ist es allerdings vorteilhaft, die Fehler nicht nur zu erkennen, sondern auch zu klassifizieren.

Für die dazu eingesetzten Methoden und Modelle der Künstlichen Intelligenz reicht es nicht aus, sie mit Daten zu trainieren, die das Normverhalten des überwachten Systems darstellen. Es müssen vielmehr auch Referenzdaten zur Verfügung gestellt werden, welche unterschiedliche Fehlerarten repräsentieren.

Naturgemäß sind diese Referenzdaten schwerer zu erhalten als diejenigen über das Normverhalten eines Systems.

Es stellt sich daher die Frage, wie viele Referenzdaten basierend auf erkannten Fehlern bzw. Anomalien notwendig sind, um eine Methode des überwachten Lernens so zu trainieren, dass ein bestimmter Fehler nicht nur erkannt, sondern auch zuverlässig klassifiziert werden kann.

Denkbar wäre der Einsatz Bayesscher Netze, welche eine Wahrscheinlichkeitsverteilung über Ausgaben als alternative Möglichkeit zur Darstellung der Modellunsicherheit ausgeben.

Bayessche Netze sind jedoch erheblich komplexer als standardmäßige neuronale Netze, was ihre Implementierung erschwert.

Erfindungsgemäß wird zur Erkennung und Klassifikation der Fehler ein künstliches neuronales Netzwerk vorgesehen, bei dem die Ausgabe über eine Softmax-Schicht erfolgt, sodass zu jedem Ergebnis eine Aussage über die Wahrscheinlichkeitsverteilung der Klassen erhalten wird.

Die Aussagen werden mit einer nicht überwachten Clustering-Technik wie vorzugweise k-Means geclustert, wobei die Anzahl der Cluster der Anzahl der Klassen von Fehlern entspricht.

Distanzmaße des Clustermodells werden als Qualitätsindikator für die Zuverlässigkeit des Klassifikationsmodells berechnet und der Trainingsvorgang so lange wiederholt, bis die Zuverlässigkeit der Klassifikationsvorgänge den vorgegebenen Qualitätsindikatoren entspricht.

Die Zahl der auf den Referenzdaten basierenden Trainingsvorgänge spielt eine wesentliche Rolle beim Einsatz neuronaler Netzwerke, da diese Trainingsvorgänge nicht nur Zeitaufwand bedeuten, sondern auch einen Stromverbrauch verursachen, die erfindungsgemäße Optimierung der Trainingsvorgänge führt also zu einer schnelleren Verfügbarkeit und einem geringeren Stromverbrauch beim Trainieren bzw. Lernen der eingesetzten künstlichen neuronalen Netzwerke.

Das erfindungsgemäße Verfahren kann besonders vorteilhaft für Produktionsanlagen angewendet werden.

Die Erfindung wird anhand von Figuren näher erläutert.

Es zeigen beispielhaft:
- Fig.1: die Aufbereitung von Referenzdaten
- Fig.2: den Prozess der Evaluierung des Klassifikationsmodells

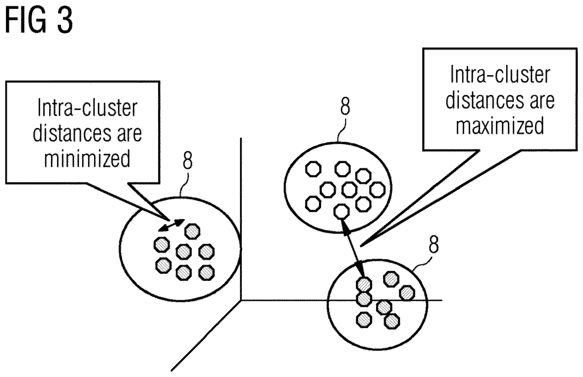

- Fig.3: schematisch das Ergebnis einer Clusterung

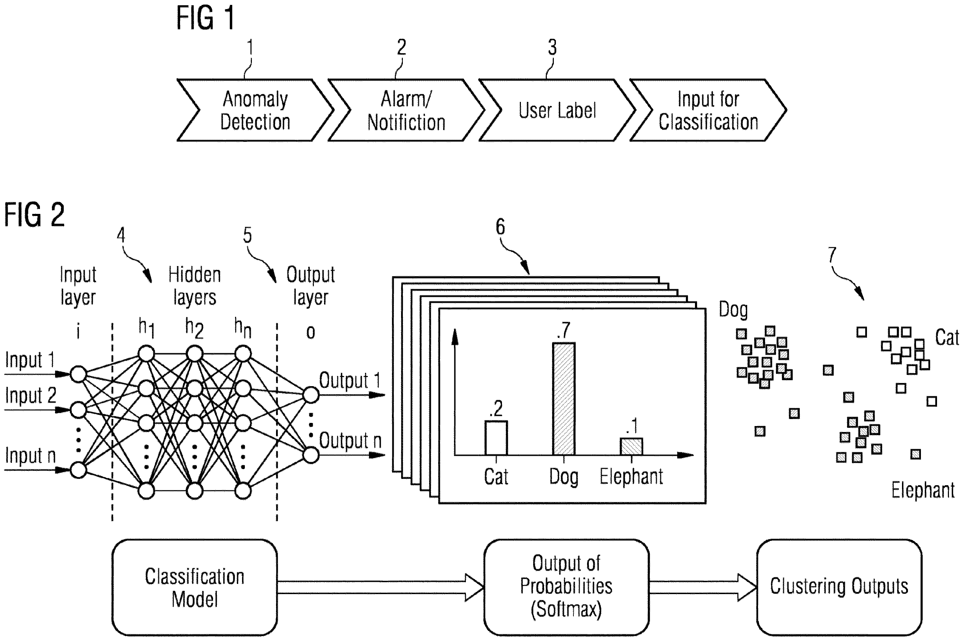

Wie in Fig. 1 dargestellt werden zur Ermittlung von Referenzdaten Betriebsparameter des überwachten Systems kontinuierlich erfasst und Abweichungen vom Normverhalten, sogenannte Anomalien, detektiert 1. Sobald eine derartige Anomalie festgestellt wird, erfolgt eine Alarmierung 2 des Bedienpersonals und die entsprechenden Daten werden analysiert und ggf. als Referenzdaten 3 für eine bestimmte Klasse von Fehlern festgehalten.

Dabei kann es zweckmäßig sein, die Fehler gezielt in das System einzuspeisen, also beispielsweise bei einem Bearbeitungs- oder Herstellungsvorgang Werkstücke mit charakteristischen Fehlern einzubringen oder die Bearbeitungsvorgänge gezielt zu stören.

Dies wird insbesondere dann von Vorteil sein, wenn die Fehlerwahrscheinlichkeit des überwachten Systems sehr gering ist und es daher vergleichsweise lange dauern würde, bis dass eine ausreichende Anzahl von charakteristischen Fehlerdaten vorliegt, um die eingesetzten Methoden und Modelle der Künstlichen Intelligenz ausreichend zu trainieren.

Wie in Figur 2 schematisch dargestellt, wird zur Erkennung und Klassifikation der Fehler ein künstliches neuronales Netzwerk 4 eingesetzt, welches mit den Referenzdaten für erkannte Fehler trainiert wird.

Neuronale Netzwerke, wie sie z. B. aus dem Buch "Neuronale Netzwerke" von Eberhard Schöneburg, Nikolaus Hansen und Andreas Gawelczyk, erschienen 1990 im Markt & Technik Verlag, bekannt sind, können komplexe, vieldimensionale Funktionen realisieren.

In den einzelnen Neuronen, die im neuronalen Netz schichtartig hintereinander angeordnet sein können, werden ankommende Signale mit Faktoren gewichtet, z. B. durch Summen- oder Produktbildung miteinander verknüpft und anschließend nach einer nichtlinearen Funktion bewertet. Der Aufbau dieser Grundfunktionen ist von der zu realisierenden Gesamtfunktion des neuronalen Netzes unabhängig.

Als Neuronen werden vielfach McCulloch-Pitts-Neuronen oder Modifikationen davon vorgesehen.

Anwendungsspezifisch sind die Anzahl der Ein- und Ausgänge, der Neuronen und die Parameter der einzelnen Neuronen festzulegen. Diese Parameter eines neuronalen Netzes können in einer Lernphase gewonnen werden, die auf der Basis von Stützwerten der zu realisierenden nichtlinearen Funktion durchführbar ist.

Ein geeignetes Lernverfahren ist das in dem oben erwähnten Buch beschriebene Backpropagation-Verfahren, bei dem die Gewichte des neuronalen Netzes zu Beginn mit Zufallswerten initialisiert werden. Daraufhin wird das erste Eingangsmuster an das Netz angelegt und das Netz komplett durchgerechnet. Der berechnete Ausgangswert des neuronalen Netzes wird nun mit dem geforderten Ausgangswert verglichen. Tritt ein Fehler auf, so werden die Gewichte des neuronalen Netzes so korrigiert, dass der korrekte Ausgangswert angenähert wird.

Das Verfahren wird so lange wiederholt, bis die gewünschte Genauigkeit der Ausgangswerte erreicht ist und das neuronale Netz die geforderte Abbildungsvorschrift gelernt hat.

Funktionell werden künstliche neuronale Netzwerke als universelle Funktionsapproximatoren betrachtet.

Die hinterste Schicht des Netzes, deren Neuronenausgaben meist als einzige außerhalb des Netzes sichtbar sind, wird Ausgabeschicht genannt. Davorliegende Schichten werden entsprechend als verdeckte Schicht bezeichnet.

Erfindungsgemäß ist die Ausgabeschicht des vorgesehenen künstlichen neuronalen Netzwerks als sogenannte Softmax-Schicht 5 ausgebildet.

Mathematisch betrachtet ist die Softmax-Funktion oder normalisierte Exponentialfunktion eine Verallgemeinerung der logistischen Funktion, die einen K-dimensionalen Vektor mit reellen Komponenten in einen K-dimensionalen Vektor ebenfalls mit reellen Komponenten in den Wertebereich (0,1) transformiert, wobei sich die Komponenten zu 1 aufsummieren.

Beim Einsatz als Ausgabeschicht in dem gegenständlichen künstlichen neuronalen Netzwerk 4 wird damit zu jedem Ergebnis eine Aussage über die Wahrscheinlichkeitsverteilung der Klassen des Fehlers 6 erhalten.

Die Aussagen werden geclustert 7,8, wobei vorzugsweise ein partitionierendes Clusterverfahren wie K-means vorgesehen wird.

Bei Einsatz des k-Means-Algorithmus werden die Clusterzentren 8 zufällig festgelegt und die Summe der quadrierten euklidischen Abstände der Objekte zu ihrem nächsten Clusterzentrum wird minimiert. Das Update der Clusterzentren geschieht durch Mittelwertbildung aller Objekte in einem Cluster.

Die Ergebnisse des Cluster-Verfahrens werden einer Evaluation unterzogen und die Ergebnisse zur Bewertung der Zuverlässigkeit des Klassifikationsvorganges herangezogen.

Die Zuverlässigkeit der Zuordnung von Datenpunkten zu Clustern kann anhand verschiedener Metriken eingeschätzt werden. Eine in der Praxis häufig verwendete Maßzahl für die Qualität eines Clusterings ist der sogenannte Silhouettenkoeffizient.

Bei diesem wird pro Datenpunkt ein Wert berechnet, der angibt, wie gut die Zuordnung zum gewählten Cluster im Vergleich zu allen anderen Clustern erfolgt ist.

Wenn dieser Koeffizient oder alternativ ein vergleichbares Qualitätskriterium zufriedenstellende Ergebnisse liefert, ist dies die Bestätigung dafür, dass auch die Klassifikationsergebnisse des künstlichen neuronalen Netzes 4 zuverlässige Ergebnisse liefern und Fehler des überwachten Systems zuverlässig erkannt und klassifiziert werden.

Ist dies hingegen nicht der Fall, müssen weitere geeignete Trainingsvorgänge durchgeführt werden, d.h. es müssen weitere Referenzdaten zur Verfügung gestellt und das künstliche neuronale Netzwerk damit trainiert werden, bis die Zuverlässigkeit der Klassifikationsvorgänge den vorgegebenen Qualitätsindikatoren entspricht.

Eine denkbare Ursache für unzureichende Ergebnisse kann auch die falsche Zuordnung von Referenzdaten zu Fehlerklassen sein. Es kann daher zweckmäßig sein, die Klassifikation der Referenzdaten zu überprüfen.

### Bezugszeichenliste

- 1: Anomalieerkennung
- 2: Alarm
- 3: Referenzdatenzuordnung
- 4: künstliches neuronales Netzwerk
- 5: Softmax-Schicht
- 6: Wahrscheinlichkeitsverteilung der Fehlerklassen von Trainingsdaten
- 7: Streudiagramm der Fehlerklassen von Trainingsdaten
- 8: Cluster

## Patentansprüche

1. Computerimplementiertes Verfahren zur Fehlererkennung in technischen Systemen, bei dem mit Methoden der künstlichen Intelligenz auf Basis von Betriebsdaten des technischen Systems Fehler erkannt (1) und klassifiziert werden, **dadurch gekennzeichnet, dass** zur Erkennung und Klassifikation der Fehler ein künstliches neuronales Netzwerk (4) vorgesehen wird, welches mit erkannten Fehlerdaten trainiert wird, dass die Ausgabeschicht des neuronalen Netzwerks als Softmax-Schicht (5) ausgebildet ist, sodass zu jedem Ergebnis eine Aussage über die Wahrscheinlichkeitsverteilung der Klassen des Fehlers (6) erhalten wird, dass die Aussagen geclustert (7,8) werden und Distanzmaße als Qualitätsindikatoren zur Bewertung der Zuverlässigkeit des Klassifikationsvorganges herangezogen werden und dass der Trainingsvorgang solange wiederholt wird, bis dass die Zuverlässigkeit der Klassifikationsvorgänge den vorgegebenen Qualitätsindikatoren entspricht.

2. Computerimplementiertes Verfahren nach Anspruch 1, **dadurch gekennzeichnet, dass** die Clusterung der Aussagen (7,8) mit einer nicht überwachten Clustering-Technik erfolgt, wobei die Anzahl der Cluster der Anzahl der Klassen von Fehlern entspricht.

3. Computerimplementiertes Verfahren nach Anspruch 2, **dadurch gekennzeichnet, dass** als nicht überwachte Clustering-Technik (7,8) k-Means vorgesehen ist.

4. Computerimplementiertes Verfahren nach einem der Ansprüche 1 bis 3, **dadurch gekennzeichnet, dass** als technisches System eine Produktionsanlage vorgesehen ist.
